# EUROPÄISCHE PATENTANMELDUNG

(11) **EP 3 095 814 A1**
(43) Veröffentlichungstag der Anmeldung: **23.11.2016**
(21) Anmeldenummer: 15168414.9
(22) Anmeldetag: 20.05.2015
(51) Int. Cl.: C08K 3/04, C08L 29/00

(54) **VERFAHREN ZUR HERSTELLUNG VON FEINKOHLE ENTHALTENDEN PRESSLINGEN**

(71) Anmelder: Primetals Technologies Austria GmbH, 4031 Linz (AT)
(72) Erfinder: Heckmann, Hado, 4020 Linz (AT); Rammer, Barbara, 4020 Linz (AT)
(74) Vertreter: Metals@Linz

(57) **Zusammenfassung**

Die Anmeldung betrifft ein Verfahren zur Herstellung von Feinkohle enthaltenden Presslingen, wobei PVA als ein Binder verwendet wird, und einer ersten Menge Feinkohle PVA mit Flüssigkeit in wässriger Lösung und/oder wässriger Dispersion zugeführt wird und dann erste Mischung unter Zugabe von Dampf erfolgt, bevor die bei dieser ersten Mischung erhaltene erste Masse zu Presslingen weiterverarbeitet wird.

Weiters betrifft sie eine Vorrichtung zur Durchführung eines solchen Verfahrens sowie einen Pressling enthaltend Feinkohle und PVA.

## Beschreibung

### Gebiet der Technik

Die Anmeldung betrifft ein Verfahren zur Herstellung von Feinkohle enthaltenden Presslingen, wobei PVA als ein Binder verwendet wird.

### Stand der Technik

Bei der Nutzung von Stückkohle in großtechnischen Prozessen wie beispielsweise Kohlevergasung, oder Roheisenerzeugung in Einschmelzvergasern - beispielsweise im Rahmen eines COREX®- oder FINEX®-Prozesses - fällt auch eine Siebfraktion einer Siebung mit Maschenweite 8mm an, beispielsweise beim Abbau in der Mine oder durch Abrieb von Stückkohle während Transport zum Einsatzort. Um auch diese Siebfraktion der Kohle in solchen Prozessen nutzen zu können, muss sie stückig gemacht werden, beispielsweise durch Pressung zu Presslingen. Die Pressung kann beispielsweise Brikettierung oder Extrusion sein. Bekannte großtechnische Verfahren dazu nutzen Binder, um im Pressling Zusammenhalt der Kohlepartikel zu gewährleisten. Bekannte in wässriger Lösung vorliegende Binder umfassen beispielsweise Melasse oder PVA. Unter PVA ist sowohl Polyvinylacetat als auch Polyvinylalkohol als auch teilweise hydrolisiertes - auch genannt verseiftes - Polyvinylacetat beziehungsweise unvollständig acetylierter Polyvinylalkohol zu verstehen.- also Polyvinylacetate aller Hydrolysierungs- beziehungsweise Verseifungsgrade.

Melasse-basierte Binder liefern in der Regel Presslinge, aus denen bei Entgasung im Rahmen von Kohlevergasung oder Einschmelzvergasung ein Char mit höherer TMS thermo mechanical strength thermomechanische Stabilität als Char aus Stückkohle entsteht. Allerdings ist bei einem solchen Char der über die Melasse erfolgende Alkalieneintrag in den Prozess eher unerwünscht; außerdem weist ein solcher Char eine hohe CO2-Reaktivität mit heißen CO2-Gas auf, und verliert Stabilität durch Umsetzung mit CO2. Abnehmende Stabilität begünstigt unerwünschten Zerfall des Char.

Alternative Verwendung von PVA führt in der Regel zu Presslingen, die sowohl hohe TMS als auch befriedigend geringe CO2-Reaktivität aufweisen; zudem werden bei der Verwendung von PVA im Vergleich zu Melasse praktisch keine Alkalien in den Prozess eingebracht. Allerdings ist PVA einerseits nur in wässriger Flüssigkeit, als Lösung oder Dispersion, als Binder einsetzbar, und ist PVA andererseits schwer wasserlöslich. Herstellung einer als Binder geeigneten PVA-Lösung bedingt daher einen verhältnismäßig hohen Wasserzusatz; üblich sind PVA-Wasser-Verhältnisse von etwa 1:5-1:10. Mit solchen Lösungen wird wiederum verhältnismäßig viel Wasser in einen Pressling eingebracht; aus verfahrenstechnischen Gründen ist jedoch der Wassergehalt der Presslinge zu begrenzen. Hoher Wassereintrag über PVA-Lösungen resultiert daher in einem erhöhten, gegebenenfalls unwirtschaftlich hohen, Trocknungsaufwand für die Presslinge. Zudem wird die Verarbeitung zu Presslingen umso schwieriger, je wässriger und damit flüssiger eine Mischung ist; bei Brikettierung mittels einer Walzenpresse beispielsweise infolge Brückenbildung im Presseneinlauf bei Materialeintrag mittels Schwerkraft, Zusetzens von Brikettformen sowie infolge mangelnden Gegendrucks der Walzenspalte von Brikettierwalzen; beziehungsweise bei Extrusion infolge eines mangelnden Gegendrucks. Verwendung hoch konzentrierter Lösungen vermindert zwar den Wassereintrag und macht die Mischungen weniger flüssig, jedoch führt höhere Konzentration zu zunehmender Viskosität und damit schlechterer Handhabbarkeit. Außerdem verlieren hochkonzentrierte Lösungen leicht ihre Homogenität, was sich beispielsweise in der Bildung zähplastischer Absätze am Boden von Aufbewahrungsbehältern äußert.

Es ist bekannt, den für die Wirksamkeit von PVA als Binder notwendigen Wassereintrag in eine Mischung zu reduzieren, indem man die Kohle mit PVA unter Zugabe von Wasserdampf - kurz Dampf - mischt. Durch den Wasserdampf wird die Mischung einerseits aufgeheiztwas die Viskosität der Mischung vermindert-, und andererseits durch Kondensation Wasser eingetragen, das in situ als Lösungsmittel für PVA fungieren kann. Auf diese Weise kann auch bei hohen PVA-Wasser-Verhältnissen gut gehandhabt werden. Durch Verwendung von überhitztem Dampf statt Sattdampf, oder durch andersartige Vorerhitzung der Kohle vor der Mischung, kann Aufheizung der Mischung gefördert werden - die Erreichung einer gewünschten Endtemperatur der Mischung ist dann mit weniger Wassereintrag in die Mischung verbunden als bei Verwendung von Sattdampf oder bei Verwendung nicht vorerhitzter Kohle. Höhere Temperatur der Mischung führt zu besserer, homogenerer Verteilung des Binders, und damit zu stabileren - beispielsweise bezüglich mechanischer Stabilität bei Transport und Bunkerung, TMS und CO2-Reaktivität- Presslingen. Eine gegebene Menge PVA führt also bei höherer Temperatur der Mischung zu stabileren Presslingen, beziehungsweise bei einer bestimmten hohen Temperatur der Mischung lässt sich eine bestimmte Stabilität mit weniger PVA erreichen als bei einer bestimmten niedrigeren Temperatur der Mischung. Aus Kostengründen ist ein möglichst geringer Verbrauch von PVA anzustreben.
Selbstverständlich führt auch Vortrocknung der Kohle beispielsweise durch Vorwärmung zu vermindertem Wassergehalt der Mischung.

In der Praxis wird Wassereintrag in die Mischung neben Dampfkondensation auch oft durch Wasserzugabe - sogenanntes Zusatzwasser - eingestellt. Das bringt regelungstechnische Vorteile, weil die Einstellung des Wassergehaltes der Mischung von der Wärmezufuhr mittels Dampf entkoppelt wird. Zudem steht bei Batch-Fahrweise des Mischers das Zusatzwasser ab dem Zeitpunkt seiner Zugabe als Lösungsmittel zur Verfügung, während sich Kondensatmenge aus Dampf erst allmählich über die Mischzeit aufbaut. Dadurch leistet Zusatzwasser gegebenenfalls einen größeren spezifischen Beitrag zur Verteilung des PVA als Kondensat; speziell wenn es zu Beginn des Mischprozesses zugegeben wird. Homogene Verteilung des PVA ist Voraussetzung für homogene Wirkung als Binder in der Mischung.

PVA kann als Pulver ein die Mischung eingebracht werden und anschließend mittels Wasserdampf in Lösung gebracht werden, oder in Lösung in die Mischung eingebracht werden. Verwendung von Lösung bringt die oben geschilderten Nachteile mit sich. Andererseits kann bei Verwendung von Lösung statt Pulver und Dampf die Mischzeit geringer gehalten werden, die zur Erreichung eines bestimmten Vermischungsausmaßes notwendig ist - oder bei Beibehaltung einer bestimmten Mischzeit das Vermischungsausmaß erhöht werden. Ein höheres Vermischungsausmaß, also homogenere Verteilung, führt zu homogenerer Wirkung als Binder. Das führt zu höherer Stabilität der Presslinge. Eine Verkürzung der Mischzeit bewirkt, dass für einen gewünschten Durchsatz der Mischer kleiner ausgeführt werden kann und somit Investitionskosten reduziert werden können.

### Zusammenfassung der Erfindung

### Technische Aufgabe

Es ist die Aufgabe der vorliegenden Erfindung, ein neues Verfahren bereitzustellen, das Verarbeitung von Kohle zu Presslingen unter Verwendung von PVA erlaubt, und zumindest einen Teil der genannten Probleme vermindert.

### Technische Lösung

Diese Aufgabe wird gelöst durch ein Verfahren zur Herstellung von Feinkohle enthaltenden Presslingen, wobei PVA als ein Binder verwendet wird,
dadurch gekennzeichnet, dass
einer ersten Menge Feinkohle PVA zugeführt wird
mit Flüssigkeit in wässriger Lösung und/oder wässriger Dispersion
und dann erste Mischung unter Zugabe von Dampf erfolgt,
bevor die bei dieser ersten Mischung erhaltene erste Masse zu Presslingen weiterverarbeitet wird.

Unter Feinkohle ist dabei zu verstehen eine Siebfraktionen aus einer Siebung mit Maschenweite 4 mm zu verstehen. Eine Fraktion einer Einsatzkohle beziehungsweise einer Einsatzkohlenmischung, die aufgrund ihrer geringen Korngröße kleiner 8mm nicht für Einsatz als Stückkohle in Frage kommt, muss gegebenenfalls noch einem Zerkleinerungsschritt unterzogen werden, um kleiner/gleich 4 mm zu sein.
Die Feinkohle kann eine Kohlesorte sein oder mehrere Kohlesorten umfassen; das gilt sowohl für die erste Menge Feinkohle als auch für die später genannte zweite Menge Feinkohle. In der Praxis hat es sich herausgestellt, dass eine zunehmende Backfähigkeit der zu brikettierenden Kohle beziehungsweise Kohlenmischung vorteilhaft für die Erzielung einer hinreichend hohen TMS thermo mechanical strength Heißfestigkeit des nach Pyrolyse eines Briketts erzeugten Char ist.
Weist eine zu brikettierende Kohle beziehungsweise Kohlemischung - beispielsweise erste Menge Feinkohle genannt - eine geringe Backfähigkeit auf, kann durch Zumischen einer gut backenden Kohle - beispielsweise zweite Menge Feinkohle genannt - das zur Erzielung einer angestrebten TMS gewünschte Backfähigkeit eingestellt werden. Da gut backende Kohlen als metallurgische Kohlen verwendet werden können, sind sie in der Regel deutlich teurer als Kohlen mit geringer Backfähigkeit. Gut backende Kohlen sollten daher möglichst sparsam verwendet werden. Aus diesem Grunde sollte auch eine mögliche Oxidation solcher Kohlen durch Wasserdampf vermieden werden. Durch Oxidation kann die Backfähigkeit erheblich reduziert werden. Deshalb kann es vorteilhaft sein, eine zweite Menge Feinkohle erst nach der Behandlung der ersten Kohlemenge mit Direktdampf zu dieser hinzuzumischen.

Unter PVA ist sowohl Polyvinylacetat als auch Polyvinylalkohol als auch teilweise hydrolisiertes - auch genannt verseiftes - Polyvinylacetat beziehungsweise unvollständig acetylierter Polyvinylalkohol zu verstehen.- also Polyvinylacetate aller Hydrolysierungsbeziehungsweise Verseifungsgrade.. PVA ist unter Standardbedingungen ein Feststoff.

### Die Flüssigkeit ist bevorzugt Wasser.

Zufuhr mit Flüssigkeit in wässriger Lösung und/oder wässriger Dispersion ist so zu verstehen, dass es drei Möglichkeiten gibt: Zufuhr nur in wässriger Lösung, Zufuhr nur in wässriger Dispersion, oder Zufuhr sowohl in wässriger Lösung als auch in wässriger Dispersion.

Unter Presslingen ist zu verstehen Briketts oder Produkte einer Extrusion.

Unter Binder sind hier Substanzen zu verstehen, welche aufgrund ihrer adhäsiven Eigenschaften den Verband der Feinkohlepartikel in einem Pressling unterstützen. Bevorzugt wird nur PVA als Binder verwendet. Nach einer anderen Variante werden neben PVA auch eine oder mehrere andere Substanzen als Binder verwendet.

Wasser wird durch Zufuhr von PVA mit Flüssigkeit und als Dampf in einem Ausmaß eingebracht, dass der Wassergehalt - im Rahmen dieser Anmeldung auch Feuchte genannt - der ersten Masse eine problemlose Handhabung und Pressung zu Presslingen erlaubt.

Das mit Flüssigkeit eingebrachte PVA wird in wässriger Lösung oder als wässrige Dispersion, also mit Wasser als kontinuierlichem Dispersionsmedium, eingebracht.

Die Wassermenge in der zu Presslingen zu verarbeitenden Mischung, in diesem Fall also der ersten Masse, beeinflusst deren Handhabbarkeit bei der Pressung. Die Wassermenge in der zu Presslingen zu verarbeitenden Mischung der Komponenten ergibt sich unter anderem aus der Feuchte der Kohle, der aus dem Dampf beim Mischen auskondensierenden Wassermenge, und der Wassermenge, die mit dem mit Flüssigkeit eingebrachten PVA eingebracht wird. Wenn die Presslinge nach der Pressung durch thermische Trocknung beispielsweise auf eine Feuchte kleiner gleich 3 % getrocknet werden soll, sollte aus Gründen der Wirtschaftlichkeit die Feuchte in der zu trocknenden Kohlepresslinge 15% nicht übersteigen.
Beträgt beispielsweise die Feuchte einer Kohle nach Vorerhitzung 4,5 % und wird infolge der Direktdampfbehandlung die Feuchte um 4% erhöht und anschließend - infolge Entwrasung der Kohlemischung und/oder Ausdampfung der Grünbriketts - die Feuchte wieder um 0,5 % reduziert, so könnten maximal 7 % Wasser in Form von PVA-Lösung und /oder Zusatzwasser eingebracht werden. Der Wassergehalt ist jeweils als Massenanteil bezogen auf die Summe von Feinkohle -Trockensubstanz -, Binder - Trockensubstanz - und Wasser =100% zu verstehen.

Das erfindungsgemäße Verfahren begünstigt bindende Wirkung des PVA dadurch, dass einerseits das PVA in flüssiger Form, also bereits für bindende Wirkung aktiviert, zugegeben wird, und andererseits mittels Dampf Wärmezufuhr und Wasserzufuhr erfolgt, was zu einer stärkeren Aktivierung des PVA führt.

Die Formulierung "dann erste Mischung unter Zugabe von Dampf erfolgt" schließt auch mit ein, daß nach vollständiger Zuführung von PVA mit Flüssigkeit Dampf zugegeben wird, oder auch schon während der Zuführung von PVA mit Flüssigkeit Dampf zugegeben wird während die zusammengeführten Komponenten Feinkohle und PVA mit Flüssigkeit gemischt werden.

Wie vorab beschrieben wird durch den erfindungsgemäß verwendeten Dampf eine Mischung einerseits aufgeheizt- was die Viskosität der Mischung vermindert-, und andererseits durch Kondensation Wasser eingetragen, das in situ als Lösungsmittel für PVA fungieren kann. Auf diese Weise kann erfindungsgemäß auch bei PVA-Wasser-Verhältnissen hoch konzentrierter Lösungen gut gehandhabt werden. Höhere Temperatur der Mischung führt zu besserer, homogenerer Verteilung des Binders, und damit zu stabileren - beispielsweise bezüglich mechanischer Stabilität bei Transport und Bunkerung, TMS und CO2-Reaktivität-Presslingen.

Nach einer Variante erfolgt die erste Mischung in einer Stufe, wobei alle Komponenten simultan miteinander vermischt werden. Das vermindert apparativen Aufwand, da nicht verschiedene Aggregate zur Durchführung einzelner Stufen vorgesehen werden müssen, und erlaubt kompaktere Bauweise einer Vorrichtung zur Durchführung eines erfindungsgemäßen Verfahrens. Nach einer anderen Variante erfolgt die erste Mischung in mehreren, bevorzugt zwei, Stufen; wobei zunächst in einer Stufe oder mehreren Stufen das PVA mit Flüssigkeit zugegeben und vorgemischt wird, und in zumindest einer darauffolgenden Stufe dampfförmige Komponenten hinzugemischt werden. Eine zweistufige Mischung mit Zugabe von PVA mit Flüssigkeit in einer ersten Stufe und Dampfzugabe in einer zweiten Stufe hat den Vorteil, dass bei Durchführung in verschiedenen Apparaturen die durch Dampf thermisch besonders belastete Apparatur kleiner ausgeführt werden kann, da eine Vermischung der Feinkohle mit PVA in Flüssigkeit bereits vorher in einer anderen Apparatur erfolgt.

### Vorteilhafte Wirkungen der Erfindung

Insgesamt ist das erfindungsgemäße Verfahren im Vergleich zu bekannten Verfahren, die nur festes PVA zusammen mit Dampf verwenden, und im Vergleich zu bekannten Verfahren, die nur PVA mit Flüssigkeit und relativ kalte Feinkohle verwenden, leichter handhabbar und liefert schneller für gewünschte Stabilitäten von Presslingen ausreichend homogen durchmischte Massen für eine Pressung. Umgekehrt kann bei gegebener Mischzeit mit weniger PVA eine gewünschte Stabilität erzielt werden. Da eine Erhöhung der Stabilität von Presslingen über ein bestimmtes Maß hinaus nicht notwendig ist, kann also die zur Erreichung dieser Stabilität notwendige Arbeitszeit beziehungsweise PVA-Menge vermindert werden.

Nachfolgende Tabelle 1 zeigt die vorteilhafte Wirkung eines erfindungsgemäßen Verfahrens.

**Tabelle 1**

| Nr. | Kohle vorgewärmt und vorgetrocknet | Mit Flüssigkeit zugeführte Menge PVA (langkettig, teilverseift) | Wasserzugabe | | | Stabilität Brikett | |
|---|---|---|---|---|---|---|---|
| | | | Mit Flüssigkeit der PVA Zugabe | Dampf Kondensation | M 140°C | SSI 140°C | CS 140°C |
| | | % | % | | % | % +20mm | N |
| 1 | ja | 0,5 | 5 | ja | 1,68 | 80,6 | 584 |
| 2 | ja | 0,5 | 5 | nein | 0,49 | 29,8 | 314 |
| 3 | nein | 0,5 | 5 | nein | 2,04 | 52,3 | 237 |

| | | | | | | | |
|---|---|---|---|---|---|---|---|
| SSI ..... Shatter strength index CS .......compression strength N ..... Newton | | | | | | | |

Hier ist die Wasserzugabe Beladung auf feuchte Feinkohle. Feuchte Feinkohle, also Feinkohle vor einem Vorwärmungs- oder Vortrocknungsschritt, macht 100% aus. Zu diesen 100% Masse wird ein Massen-Bruchteil Wasser zugegeben.. Beispielsweise werden 100 kg Feinkohle, die keiner Vorwärmung oder Vortrocknung unterzogen wurde, 5 kg Wasser zugegeben; das entspricht einer Beladung mit 5%.
Das gilt auch für die nachfolgende Tabelle 2.

Die Versuche in Tabelle 1 wurden jeweils mit dem gleichen Binder - langkettiges, teilverseiftes PVA - durchgeführt. Bei der Zugabe von PVA mit Flüssigkeit war das Verhältnis PVA zu Flüssigkeit in allen Fällen gleich. Bei Versuchen Nr. 1 und Nr. 2 wurde die Feinkohle jeweils 30 Minuten bei 140°C in einem Trockenschrank vorgetrocknet und vorgewärmt. Beim Versuch Nr. 3 wurde ungetrocknete, nicht vorgewärmte Feinkohle verwendet. Bei allen Versuchen wurde das mit Flüssigkeit zugegebene PVA in einer ersten Stufe der ersten Mischung zwei Minuten lang mit der Feinkohle vermischt. Eine anschließende zweite Stufe der ersten Mischung dauerte 3,8 Minuten, wobei beim Versuch Nr. 1 hier Dampf eingedüst wurde. Bei den Versuchen Nr. 2 und Nr. 3 wurde in der zweiten Stufe kein Dampf verwendet. Die totale Mischzeit betrug bei allen Versuchen 5,8 Minuten.
Nach der ersten Mischung wurde die erhaltene erste Masse jeweils in einer Walzenpresse brikettiert. Die erhaltenen Briketts - auch Grünbriketts genannt - wurden 60 Minuten bei 140°C in einem Trockenschrank getrocknet. Anschließend wurden die Druckfestigkeit compression strength CS und der Shatter strength index SSI der getrockneten Briketts ermittelt. Hierbei zeigten die unter Verwendung von Dampf hergestellten Briketts bei ansonsten gleichem Verfahrensablauf die besten Stabilitätswerte. Dies ist insofern überraschend, als das erfahrungsgemäß Druckfestigkeit und mit SSI angegebene Shatterfestigkeit konkurrierende Eigenschaften sind: relativ feuchtere Briketts tendieren zu höheren Shatterfestigkeiten und zu niedrigeren Druckfestigkeiten CS; relativ trockenere Briketts tendieren zu niedrigeren Shatterfestigkeiten und höheren Druckfestigkeiten CS. Diese üblichen Verhältnisse zeigen sich im Vergleich der Versuche Nr. 2 und Nr. 3. Diesbezüglich sind die zu den getesteten Briketts zugehörigen Feuchten (M 140°C) in Massen% Gehalt an Wasser nach einer Wärmebehandlung bei 140°C in einem Trockenschrank (Beispielsweise sind in einem Brikett von 500 g Masse mit M 140°C = 2,04 Massen% 10,2 g dieser 500 g Wasser..
angegeben. Versuch Nr. 3 liefert, da die Feinkohle nicht vorgetrocknet wurde, ein feuchteres Brikett als Versuch Nr. 2. Entsprechend ist in Versuch Nr. 3 der SSI höher und damit die Shatterfestigkeit höher, sowie die Druckfestigkeit geringer als in Versuch Nr. 2.
Bei erfindungsgemäßer Verfahrensführung nach Versuch Nr. 1 ist sowohl die Shatterfestigkeit als auch die Druckfestigkeit gegenüber den Versuchen Nr.2 und Nr.3 erheblich erhöht. Die Shatterfestigkeit ist gegenüber Versuch Nr. 3 erhöht, obwohl die Feuchte der Briketts geringer ist. Die Druckfestigkeit ist gegenüber Versuch Nr. 2 erhöht, obwohl die Feuchte der Briketts größer ist.

Der verwendete Dampf war Direktdampf, also Dampf, der mit dem aufzuheizenden Medium in direktem Kontakt steht.

Angaben zur Bestimmung von SSI und CS sind der nachfolgenden Diskussion der Tabelle 2 zu entnehmen.

Die Feinkohle kann bei Bedarf vorgetrocknet werden, bevor sie im erfindungsgemäßen Verfahren eingesetzt wird. Das ist in Versuch Nr.1 der Tabelle 1 beispielhaft gezeigt. Die Vortrocknung hat Einfluß auf die Feuchte der Presslinge, da sie den Eintrag von Wasser durch die Feinkohle vermindert.

Die Feinkohle kann auch vorgewärmt werden, bevor sie im erfindungsgemäßen Verfahren eingesetzt wird. Wie oben erläutert, wird durch Wärme die Aktivierung von PVA als Binder gefördert.

Großtechnisch können für eine Wärmebehandlung beziehungsweise Trocknung von Presslingen als Trocknungsmedium oder Energieträger beispielsweise Rauchgas-Luftgemische bereitet aus CO-haltigen Hüttengasen wie Exportgas aus einem COREX- oder FINEX-Prozess, Tailgas aus CO2-Entfernungsanlagen wie etwa PSA-Anlagen, Produktgas aus CO2-Entfernungsanlagen wie etwa PSA-Anlagen, Reduktionsgas aus einem COREX-oder FINEX-Prozess, oder Hochofen-Gichtgas, Konvertergas, oder Mischungen aus zwei oder mehreren solcher Gase, oder, gegebenenfalls überhitzter, Dampf verwendet werden.

Nach einer bevorzugten Variante des Verfahrens wird
der ersten Menge Feinkohle PVA zugeführt
sowohl
mit Flüssigkeit in wässriger Lösung und/oder wässriger Dispersion
als auch
als Feststoff pulverförmig,
und dann erste Mischung unter Zugabe von Dampf erfolgt,
bevor die bei dieser ersten Mischung erhaltene erste Masse zu Presslingen weiterverarbeitet wird.

Wasser wird durch Zugabe mit Flüssigkeit und Dampf in einem Ausmaß eingebracht, dass der Wassergehalt der ersten Masse eine problemlose Handhabung und Pressung zu Presslingen erlaubt.
Zusätzlich zum dem als Flüssigkeit eingebrachten PVA wird PVA auch als Feststoff pulverförmig eingebracht. Pulverförmig bedeutet in diesem Zusammenhang eine Partikelgröße kleiner 500 mikrometer, bevorzugt kleiner 200 mikrometer.
Mit Flüssigkeit wird nur ein Teil des für eine angestrebte Stabilität notwendigen PVA eingebracht. Der Rest an PVA wird pulverförmig eingebracht.

Die Formulierung "dann erste Mischung unter Zugabe von Dampf erfolgt" schließt auch mit ein, dass nach vollständiger Zuführung von PVA mit Flüssigkeit und vollständiger Zuführung von Feststoff PVA Dampf zugegeben wird, oder auch schon während der Zuführung von PVA mit Flüssigkeit und/oder Feststoff PVA Dampf zugegeben wird während einige oder alle der zusammengeführten Komponenten Feinkohle, PVA mit Flüssigkeit, PVA Feststoff gemischt werden.

Das erfindungsgemäße Verfahren begünstigt bindende Wirkung des PVA dadurch, dass mittels Dampf Wärmezufuhr und Wasserzufuhr erfolgt. Weiterhin begünstigt es bindende Wirkung des zugegebenen PVA dadurch, dass ein Teil des insgesamt für eine bestimmte Stabilität der Presslinge benötigten PVA in flüssiger Form, also aktiver als in fester Form, zugegeben wird. Dieses PVA ist früher bindend aktiv als fest zugegebenes PVA, welches zur Aktivierung erst durch in Lösung gehen beziehungsweise dispergiert werden muss.

Zugabe von festem PVA begrenzt die Menge an PVA, die mit Flüssigkeit eingebracht werden muss. Da auch die Flüssigkeitsmenge - also Wassermenge - dabei begrenzt ist, um eine bei Pressung handhabbare Masse zu erhalten, müssen zugegebene Lösungen oder Dispersionen weniger konzentriert sein, was ihre Handhabung erleichtert. Auf diese Weise kann erfindungsgemäß auch bei PVA-Wasser-Verhältnissen hoch konzentrierter Lösungen gut gehandhabt werden. Die Aktivierung des festen PVA wird durch die Aufheizung der Mischung durch den Dampf sowie die Eintragung von Wasser durch Kondensation begünstigt.
Die durch den Dampf herbeigeführte Aufheizung der Mischung führt zu besserer, homogenerer Verteilung des Binders, und damit zu stabileren - beispielsweise bezüglich mechanischer Stabilität bei Transport und Bunkerung, TMS und CO2-Reaktivität-Presslingen.

Nach einer Variante erfolgt die erste Mischung in einer Stufe, wobei alle Komponenten simultan miteinander vermischt werden; das erlaubt bei kontinuierlicher Verfahrensführung kompakte Bauweise.

Nach einer anderen Variante erfolgt die erste Mischung in mehreren, bevorzugt zwei, Stufen; wobei zunächst in einer Stufe oder mehreren Stufen die festen Komponenten trocken vorgemischt werden, und in zumindest einer darauffolgenden Stufe flüssige und dampfförmige Komponenten hinzugemischt werden. Eine zweistufige Mischung mit Zugabe von festem PVA in einer ersten Stufe hat den Vorteil, dass pulverförmiges PVA sich leichter gleichförmig in der Feinkohle verteilen lässt; in feuchtem Zustand ist so ein PVA äußerst adhäsiv und lässt sich schwieriger verteilen. Gleichförmige Verteilung - ohne Klumpenbildung - resultiert später in optimaler Enthaltung der Wirkung dieses PVA als Binder. In einer zweiten Stufe kann dann PVA mit Flüssigkeit zugegeben werden sowie Dampf.
Es kann auch in einer zweiten Stufe PVA mit Flüssigkeit zugegeben werden, und in einer dritten Stufe Dampf. Wie bereits vorab angemerkt, kann bei Durchführung verschiedener Stufen in verschiedenen Apparaturen die durch Dampf thermisch besonders belastete Apparatur kleiner ausgeführt werden kann, da Stufen ohne Dampf in anderen Apparaturen erfolgen und daher die Verweilzeit in einer mit Dampf thermisch belasteten Apparatur kürzer sein kann als bei Durchführung mehrerer beziehungsweise aller Stufen in einer Apparatur.

Insgesamt ist das erfindungsgemäße Verfahren im Vergleich zu bekannten Verfahren, die nur festes PVA zusammen mit Dampf verwenden, und im Vergleich zu bekannten Verfahren, die nur PVA mit Flüssigkeit und relativ kalte Feinkohle verwenden, leichter handhabbar und liefert schneller für gewünschte Stabilitäten von Presslingen ausreichend homogen durchmischte Massen für eine Pressung. Da eine Erhöhung der Stabilität von Presslingen über ein bestimmtes Maß hinaus nicht notwendig ist, kann also die zur Erreichung dieser Stabilität notwendige PVA-Menge vermindert werden.

Gegebenenfalls erfolgt die erste Mischung auch unter Zugabe von Zusatzwasser, beispielsweise, wenn zur Einstellung eines für optimale Ausnutzung des Bindevermögens von PVA optimale Wassermenge mehr Wasser in der Mischung erfordert, als Feuchte der Kohle, auskondensierte Wassermenge, und mit Flüssigkeit eingebrachtes PVA in Summe ergeben. Im Vergleich zu bekannten Verfahren mit Zugabe von Zusatzwasser bei Nutzung von festem PVA mit Dampf wird erfindungsgemäß weniger Zusatzwasser zugegeben, weil das mit Flüssigkeit eingebrachte PVA bereits eine Wassermenge einbringt. Das bedeutet, dass erfindungsgemäß ein größerer Anteil des PVA früher zur Wirkung als Binder aktiviert ist - PVA-Knäuel in festem PVA werden durch Wasser zu bindend aktiven langgestreckten Formen entknäuelt. Im Vergleich zum Stand der Technik, bei dem das meiste zur Aktivierung des gesamten PVA benötigte Wasser erst ab dem Zeitpunkt der Zugabe des Zusatzwassers bereitgestellt wird, ist beim erfindungsgemäßen Verfahren ein Teil des PVA bereits aktiviert, weil er in Flüssigkeit zugegeben wird. Ein Pressling mit einer bestimmten Stabilität kann also früher erhalten werden, weil das PVA früher aktiv ist.
Die Regelung der Zugabe von Zusatzwasser kann mit einer Online-Feuchte-Messung verbunden erfolgen. Die zugegebene Menge von Zusatzwasser hängt beispielsweise von Schwankungen der Feuchte der Feinkohle oder der auskondensierten Wassermenge ab. Wie vorab beschrieben, leistet Zusatzwasser gegebenenfalls einen größeren spezifischen Beitrag zur Verteilung des PVA als Kondensat; speziell wenn es zu Beginn des Mischprozesses zugegeben wird.

Gegebenenfalls umfasst die Weiterverarbeitung der ersten Masse zu Presslingen einen Entwrasungsschritt. Auf diese Weise kann Wasser, nachdem es seinen notwendigen Beitrag zur Aktivierung des PVA geleistet hat, teilweise entfernt werden, bevor es sich negativ auf die Pressung der ersten Masse zu Presslingen auswirkt. Beispielsweise wird dadurch erreicht, dass infolge erhöhter Zähigkeit ein höherer Arbeitsdruck im Walzenspalt einer Brikettierwalze aufgebaut werden kann.

Bevorzugterweise umfasst die Weiterverarbeitung der ersten Masse zu Presslingen auch Zugabe einer zweiten Menge Feinkohle zu der ersten Masse,
und erfolgt eine zweite Mischung dieser beiden Komponenten,
bevor die dabei erhaltene Produktmasse zu Presslingen weiterverarbeitet wird.

Die zweite Menge Feinkohle kann simultan mit Zugabe von PVA in wässriger Lösung und/oder in wässriger Dispersion zu der ersten Masse zugegeben werden; dabei kann die selbe PVA-Sorte wie bei Bereitung der ersten Masse verwendet worden, oder eine andere PVA-Sorte; bevorzugt wird bei Bereitung der ersten Masse vollverseiftes PVA verwendet, während das simultan zur zweiten Menge Feinkohle zugegebene PVA teilverseift ist. In diesem Fall würde bei der Bereitung der ersten Masse nicht die gesamte für eine gewünschte Stabilität der Presslinge benötigte Menge PVA zugegeben worden sein; diese gesamte benötigte Menge wäre erst durch die simultan zur Zugabe der zweiten Menge Feinkohle vorhanden.
Wenn bei der Bereitung der ersten Masse bereits die gesamte für eine gewünschte Stabilität der Presslinge benötigte Menge PVA zugegeben wurde, ist keine Zugabe von PVA in wässriger Lösung und/oder in wässriger Dispersion zu der ersten Masse simultan zur Zugabe der zweiten Menge Feinkohle notwendig.

Nach einer Variante wird dabei, vor ihrer Zugabe zur ersten Masse
die zweite Menge Feinkohle
mit PVA in wässriger Lösung und/oder in wässriger Dispersion
zu einer zweiten Masse gemischt,

und erfolgt Zugabe der zweiten Menge Feinkohle zu der ersten Masse durch Zugabe der zweiten Masse.

Nach einer Variante des erfindungsgemäßen Verfahrens wird für die erste Masse in wässriger Lösung und/oder wässriger Dispersion vollverseiftes PVA verwendet, und für die zweite Masse in wässriger Lösung und/oder wässriger Dispersion teilverseiftes PVA.

Nach einer bevorzugten Variante erfolgt die Zugabe einer zweiten Menge Feinkohle während der Entwrasung oder nach der Entwrasung der ersten Masse.

Grundsätzlich eröffnet die Zugabe einer zweiten Menge Feinkohle zu der ersten Masse die Möglichkeit, Kohlesorten in den Pressling einzubringen, für die eine Mischung unter Dampfeinsatz ungünstig wäre. Backfähigkeit von Kohle wird durch Dampfbehandlung erheblich reduziert. Vorhandensein besser backender Kohlen ergibt nach Pyrolyse des Presslings einen Char beziehungsweise Halbkoks, der stabiler ist, als Char oder Halbkoks aus schlechter backenden Kohlen. Gut backende Kohlen, auch genannt metallurgische Kohlen, sind teurer als schlecht backende Kohlen, auch genannt energetische Kohlen. Die Backfähigkeit gut backender Kohlen soll daher in vollem Umfang ausgenutzt werden. Der Anteil metallurgischer Kohlen an der gesamten Feinkohle - also der Summe aus erster Menge und zweiter Menge - liegt bevorzugt im Bereich 10-50 Massen%, besonders bevorzugt 15-33 Massen%, ganz besonders bevorzugt 15-25 Massen%. Unterhalb 10 Massen% ist praktisch kein Effekt auf die Stabilität von Halbkoks und Char mehr feststellbar, oberhalb von 50 Massen% ist die Wirtschaftlichkeit fraglich.
Bevorzugterweise besteht die zweite Menge Feinkohle aus metallurgischer Kohle.

Wenn die zweite Menge Feinkohle mit PVA in wässriger Lösung oder in wässriger Dispersion zu einer zweiten Masse gemischt wird, die dann der ersten Masse zugegeben wird, kann mengenmäßig mehr an zweiter Menge Feinkohle in den Pressling eingebracht werden, als wenn nur die zweite Menge Feinkohle zur ersten Masse zugegeben wird.

Selbstverständlich wird nach Vereinigung der ersten Masse mit der zweiten Menge Feinkohle, beziehungsweise nach Vereinigung der ersten Masse und der zweiten Masse ein Mischschritt zur Homogenisierung der beiden Massen zur Produktmasse durchgeführt, bevor Pressung erfolgt.

Bevorzugterweise wird eine Formung zu Presslingen direkt ausgeführt wird an einem Mitglied der Gruppe bestehend aus:
- erste Masse,
- entwraste erste Masse,
- Produktmasse.

Es werden also keine weiteren Verfahrensschritte wie durchgeführt, wie beispielsweise Zugabe weiterer Komponenten oder Ablagern, sondern die Mitglieder der Gruppe werden nach ihrer Herstellung direkt der Formung zugeführt.

Die Wassermenge in der zu Presslingen zu verarbeitenden Mischung beeinflusst deren Handhabbarkeit bei der Pressung. Die Wassermenge in der zu Presslingen zu verarbeitenden Mischung, also der ersten Masse, der entwrasten ersten Masse, oder der Produktmasse, ergibt sich unter anderem aus der Feuchte der Kohle, der aus dem Dampf beim Mischen auskondensierenden Wassermenge, und der Wassermenge, die mit dem mit Flüssigkeit eingebrachten PVA eingebracht wird. Eine Entwrasung hat ebenfalls einen Einfluss auf die Wassermenge in der zu Presslingen zu verarbeitenden Mischung.

Bevorzugterweise wird die Feuchte der ersten Masse und/oder der entwrasten ersten Masse und/oder der zweiten Masse und/oder der Produktmasse, bevorzugt kontinuierlich, gemessen, und zumindest eine dieser Feuchten und/oder die Feuchte der Presslinge direkt oder indirekt auf einen Zielbereich hin geregelt durch zumindest eine Maßnahme aus der Gruppe bestehend aus den Mitgliedern:
- Einstellung der durch wässrige Lösung oder wässrige Emulsion von PVA zugeführten spezifischen Wassermenge pro Mengeneinheit Feinkohle;
- Einstellung der durch Zusatzwasser zugeführten spezifischen Wassermenge pro Mengeneinheit Feinkohle;
- Einstellung der durch Zugabe von Dampf bei der ersten Mischung zugeführten spezifischen Wassermenge pro Mengeneinheit Feinkohle;
- Einstellung Feuchte der Feinkohle;
- Einstellung des Mengenverhältnisses erste Masse zu zweiter Masse bei Herstellung einer Produktmasse;
- Einstellung der zugegebenen Menge Zusatzwasser.

Die Feuchte der Presslinge kann beispielsweise die Feuchte von Grünpresslingen sein, also des direkten Produktes der Pressung.

Bevorzugterweise wird auch die Temperatur der ersten Masse und/oder der entwrasten ersten Masse und/oder der zweiten Masse und/oder der Produktmasse, bevorzugt kontinuierlich, gemessen, und zumindest eine dieser Temperaturen und/oder die Temperatur der Presslinge direkt oder indirekt auf einen Zielbereich hin geregelt durch zumindest eine Maßnahme aus der Gruppe bestehend aus den Mitgliedern:
- Einstellung der durch Zugabe von Dampf bei der ersten Mischung zugeführten spezifischen Wärmemenge pro Mengeneinheit Feinkohle;
- Einstellung der Temperatur der ersten Menge Feinkohle und/oder der zweiten Menge Feinkohle,
- Einstellung der durch wässrige Lösung oder wässrige Emulsion von PVA zugeführten spezifischen Wärmemenge pro Mengeneinheit Feinkohle;
- Einstellung der von
   als Feststoff pulverförmig zugeführtem PVA
   zugeführten spezifischen Wärmemenge pro Mengeneinheit Feinkohle;
- Einstellung der durch Zusatzwasser zugeführten spezifischen Wärmemenge pro Mengeneinheit Feinkohle;
- Einstellung des Mengenverhältnisses erste Masse zu zweiter Masse bei Herstellung einer Produktmasse.

Die Temperatur der Presslinge kann beispielsweise die Feuchte von Grünpresslingen sein, also des direkten Produktes der Pressung.

Auf diese Weise kann das erfindungsgemäße Verfahren hinsichtlich Feuchte und Temperatur der zu Presslingen zu verarbeitenden Mischung optimiert betrieben werden.

Aus Gründen der Verfahrensökonomie sowie gegebenenfalls in Hinsicht auf gewünschte Eigenschaften des Presslings ist es bevorzugt, nur so viel wie nötig und so wenig wie möglich Binder in den Pressling einzubringen.
Bevorzugterweise beträgt die mit Flüssigkeit in wässriger Lösung oder wässriger Dispersion zugeführte Menge PVA
zumindest 0,05%, bevorzugt zumindest 0,1 %, besonders bevorzugt zumindest 0,2%.

Bevorzugterweise beträgt die zugeführte Menge PVA insgesamt zumindest 0,2%, bevorzugt zumindest 0,3%, besonders bevorzugt zumindest 0,4%.
Bevorzugterweise beträgt die mit Flüssigkeit in wässriger Lösung oder wässriger Emulsion zugeführte Menge PVA
maximal 1,5 %, bevorzugt maximal 0,7%, besonders bevorzugt maximal 0,5%. Bevorzugterweise beträgt die zugeführte Menge PVA insgesamt maximal 2,5%, bevorzugt maximal 1,5%, besonders bevorzugt maximal 0,9%.

Diese bezüglich Menge PVA angegebenen % sind auf die Masse der eingesetzten Feinkohle bezogen = 100 %; dabei handelt es sich um die Masse feuchter Feinkohle, also Feinkohle wie zur Herstellung der Briketts angeliefert, die noch keiner Wärmebehandlung beziehungsweise Vortrocknung unterzogen wurde.

Unterhalb der angegebenen Mindestmengen beziehungsweise oberhalb der angegebenen Maximalmengen ergeben sich die positiven Wechselwirkungen zwischen fester PVA-Zugabe, flüssiger PVA-Zugabe bei Mischung unter Zugabe von Dampf nicht oder nicht mit einem ökonomisch sinnvollen Aufwand.

Nach einer Ausführungsform des Verfahrens werden verschiedene Sorten PVA zugeführt; beispielsweise eine erste Sorte fest, und eine zweite Sorte mit Flüssigkeit. Oder jeweils mehrere verschiedene Sorten fest und/oder mit Flüssigkeit. Auf diese Weise lassen sich verschiedene Bindersorten-Eigenschaften ausnutzen.
Nach einer Ausführungsform ist das mit Flüssigkeit in wässriger Lösung oder wässriger Dispersion zugeführte PVA vollverseift, und das als Feststoff pulverförmig zugeführte PVA teilverseift.
Unter vollverseiftem PVA versteht man PVA mit einem Verseifungsgrad größer gleich 90%. Unter teilverseiftem PVA versteht man PVA mit einem Verseifungsgrad kleiner 90%.
Der Verseifungsgrad hat einen großen Einfluß auf die Löslichkeit des PVA. Er gibt an, wieviel Prozent der Acetatgruppen eines Ausgangspolymers Polyvinylacetat zu OH-Gruppen verseift wurden. Je höher der Verseifungsgrad, desto geringer sind die Löslichkeit und die Lösegeschwindigkeit.

Mit zunehmender Kettenlänge nimmt die Löslichkeit von PVA in Wasser bei vergleichbaren Konzentrationen des Polymeren ab. Zurückzuführen ist dies unter anderem auf die höhere Viskosität der Lösung, die sich aus der höheren Kettenlänge des Polymers ergibt. Zur Charakterisierung von PVA wird daher üblicherweise die Viskosität einer 4 %igen wässrigen Lösung bei 20°C (nach DIN 53015) in mPa*s als Maß für die Kettenlänge angegeben.

Als kurzkettiges PVA bezeichnet man dementsprechend ein PVA mit einer Viskosität von < 20mPa*s. Mittelkettiges PVA liegt zwischen 20 und 30 mPa*s und langkettiges PVA bei >30 mPa*s.

Je höher der Verseifungsgrad oder die Kettenlänge sind, desto schwieriger ist es, eine Lösung oder Dispersion anzufertigen - desto schwieriger ist es also, das PVA als Binder zu aktivieren. Der Verseifungsgrad hat dabei einen stärkeren Einfluss als die Kettenlänge. Für solche PVAs ist es daher günstiger, schon vorab eine Lösung oder Dispersion anzufertigen, und zur Herstellung der ersten Masse zu verwenden, als sie erst als pulverförmigen Feststoff zuzugeben und dann noch aktivieren zu müssen.

Nach einer bevorzugten Ausführungsform ist das mit Flüssigkeit in wässriger Lösung oder wässriger Dispersion
zugeführte PVA vollverseift und mittel- oder kurzkettig
und
das als Feststoff pulverförmig zugeführte PVA teilverseift und langkettig.

Überraschenderweise hat sich gezeigt, dass bei einer solchen Kombination höchste Brikett-Stabilitäten erzielt wurden, wie anhand der nachfolgenden Tabelle 2 bei Brikettherstellung erläutert wird.

**Tabelle 2**

| Nr | Zugeführte Menge PVA | | | PVA Sorte | | Wasserzugabe | | Stabilität Brikett | |
|---|---|---|---|---|---|---|---|---|---|
| | fest | flüssig | total | Fest zugegeben | Mit Flüssigkeit zugegeben | Via PVA mit Flüssigkeit | Via Zusatzwasser | SSI 140°C | CS 140°C |
| | % | % | | | | | | % +20mm | N |
| 1 | 1 | | 1 | Langkettig teilverseift | | | 3 | 92 | 430 |
| 2 | 0,7 | 0,3 | 1 | Langkettig teilverseift | Langkettig teilverseift | 3 | | 94 | 571 |
| 3 | 0,4 | 0,3 | 0,7 | Langkettig teilverseift | Langkettig teilverseift | 3 | | 89 | 535 |
| 4 | 0,4 | 0,3 | 0,7 | Langkettig teilverseift | mittelkettig vollverseift | 3 | | 82 | 1472 |
| 5 | | 0,7 | 0,7 | | mittelkettig vollverseift | 7 | | 80 | 468 |

| | | | | | | | | | |
|---|---|---|---|---|---|---|---|---|---|
| SSI.... Shatter strength index CS......Compression strength N .... Newton | | | | | | | | | |

Langkettig bedeutet in Tabelle 2 eine Viskosität von 47 mPa*s, mittelkettig bedeutet eine Viskosität von 28 mPa*s..

Vollverseift bedeutet in Tabelle 2 einen Verseifungsgrad von 99%, teilverseift bedeutet einen Verseifungsgrad von 88%.

Festes PVA wurde mit einer Partikelgröße von kleiner 200 mikrometer verwendet.

Vorzugsweise beträgt die Korngröße des als Feststoff pulverförmig zugeführten PVA <200 µm beträgt. Dabei ist gute Mischbarkeit und Homogenisierbarkeit gegeben. Je größer das Korn, umso weniger gleichmäßig ist die Verteilung des Binders in der Mischung, selbst wenn die Körner gleichmäßig in der Mischung verteilt wären. Ferner erhöht sich mit der Korngröße auch die Zeit für eine vollständige Auflösung in Wasser. Um PVA bei gröberer Körnung vollständig aufzulösen, müssten daher größere Mischer verwendet werden. Wird kein größerer Mischer verwendet, kann der Grad der Auflösung weniger vollständig sein, so dass die Bindewirkung des PVA nicht voll ausgenutzt wird.

Großtechnisch kann PVA beispielsweise mittels Kryomahlung auf diese Korngröße gebracht werden.

Während in Versuch Nr. 1 und Nr. 5 nicht erfindungsgemäß gearbeitet wird, zeigen Versuche 2,3,4 erfindungsgemäße Verfahrensführungen. Versuche Nr. 1 und Nr. 2 zeigen, dass erfindungsgemäße Verfahrensführung im Vergleich zur Zugabe von festem PVA bei gleicher Gesamtmenge PVA deutlich bessere compression strenght CS- also Vorteile bei Druckbeanspruchung durch über einem Pressling liegende Schichten von Presslingen während Bunkerung der Briketts ergibt. Der Shatter strength index wird ebenfalls positiv beeinflusst und bringt Vorteile bei Transport und Bunkerung; der SSI gibt Aufschluß über das Verhalten beim Abwurf eines Presslings in eine darunterliegende Schüttung in einem Bunker. Versuche Nr. 1 und Nr. 2 unterscheiden sich lediglich dadurch, dass bei Versuch Nr.1 Wasser und bei Versuch Nr. 2 PVA-Lösung hinzugegeben wurde.

Einen ähnlichen Zusammenhang zeigen die Versuche Nr. 3 und Nr. 4 im Vergleich mit Versuch Nr. 5, bei dem gleiche Menge PVA nur flüssig zugegeben wird.

Die Versuche Nr. 3 und Nr. 4 unterscheiden sich dadurch, dass bei Nr. 4 fest und in Flüssigkeit verschiedene Sorten PVA zugeführt werden, während bei Nr. 3 gleiche Sorten PVA fest und mit Flüssigkeit verwendet werden.
Versuch Nr. 4 führt mit Flüssigkeit vollverseiftes PVA zu, und fest teilverseiftes PVA. Im Vergleich mit Versuch Nr. 3 zeigt sich der überraschende Effekt, dass der Wechsel von langkettig teilverseift auf mittelkettig vollverseift extrem erhöhte compression strenght CS ergibt.

In Versuch Nr. 1 wird mehr PVA zugegeben als in Versuch Nr. 5. Das liegt daran, dass eine Versuch Nr. 1 entsprechende Zugabe von PVA unter den Bedingungen von Versuch 5 zu einer nicht mehr handhabbaren Flüssigkeit führen würde.

Bei den Versuchen in Tabelle 2 wurde eine Kohlemischung aus 20% CSA - eine relativ zu den anderen beiden Kohlesorten gut backende tschechische Semikokskohle - , 40% TSA-eine südafrikanische energetische Kohle - und 40% South Blackwater (australische Kraftwerkskohle) - eine energetische Kohle - verwendet; jeweils Massenprozent bezogen auf die gesamte Kohlemischung. Körnung auf kleiner gleich 4 mm eingestellt. Vortrocknung auf ca. 5Massenprozent Wassergehalt in einem Trockenschrank 30 min bei 140°C. Anschließend wurde die Mischung als Feinkohle in einen Intensivmischer der Firma Eirich eingesetzt und trocken homogenisiert für eine halbe Minute. Dann wurde dieser ersten Menge Feinkohle PVA pulverförmig zugegeben in den Versuchen Nr. 1 bis Nr. 4. In Versuch Nr. 1 wurde dann Zusatzwasser zugegeben. Bei den Versuchen Nr. 2 bis Nr. 5 wurde hingegen PVA mit Flüssigkeit in wässriger Lösung zugegeben, während einer Minute. Danach wurde in allen 5 Versuchen unter Einleitung von Wasserdampf - Sattdampf bei etwa 1 bar abs. -für 3,8 Minuten weiter gemischt. Da bei Versuch Nr. 5 keine Zugabe von PVA pulverförmig erfolgte, wurde dort die Dauer der Zugabe von PVA mit Flüssigkeit um eine Minute verlängert im Vergleich zu den Versuchen Nr. 2,3,4, um insgesamt vergleichbare Behandlungszeit einzustellen. Die Zufuhr des Wassedampfs war so bemessen, dass durch Kondensation des Wasserdampfes die erste Masse eine Temperatur von 97-98°C hatte vor der Brikettierung. Die Brikettierung erfolgte mit einem Durchsatz von etwa 1,2 t/min. Die bei #20 mm abgesiebten Briketts wurden anschließend bei 140°C 60 Minuten lang im Trockenschrank aufbewahrt. Nach Entnahme aus dem Trockenschrank wurden die Briketts auf Punktdruckfestigkeit Compression strength CS und Shatter strength getestet. Zur Ermittlung der CS wurden die Briketts jeweils auf einer ebenen Stahlplatte auf einer Waage zerdrückt. Zur Ermittlung der Shatter strength wurden die Briketts 4mal aus einer Höhe von 5 m auf eine starre Platte gestürzt und anschließend einer Siebanalyse unterzogen. Anhand der Siebung wurde die Fraktion +20mm als Shatter strength index SSI +20mm bestimmt.

### PVA kann der einzige Binder sein.

Es kann neben PVA auch zumindest ein weiterer Binder vorhanden sein, bevorzugt Teer und/oder Bitumen.
Zumischung von Teer und/oder Bitumen erhöht die thermomechanische Stabilität und die senkt die Reaktivität eines aus den Presslingen gewonnenen Halbkoks oder Chars. TMS und Reaktivität bezüglich Reaktion mit heißem CO2 sind beide Ausprägungen der sogenannten Heißfestigkeit; hohe TMS und niedrige Reaktivität sind gewünscht, um einen stabilen Pressling zu erhalten. Die Zumischung von Teer und/oder Bitumen kann auch in wässriger Emulsion erfolgen, wobei das Wasser der Emulsion zumindest einen Teil oder die gesamte Funktion eines erfindungsgemäßen Zusatzwassers übernehmen kann.
Die Erhöhung von thermomechanischer Stabilität ist besonders bei Verwendung von energetischen, nicht-metallurgischen Kohlen interessant, weil sich für diese Kohlen dadurch neue wirtschaftlich tragbare Einsatzmöglichkeiten erschließen; beispielsweise Einsatz in Einschmelzvergasern zur Bereitstellung von Char. Auf diese Weise können solche Aggregate einfacher kokslos und damit billiger betrieben werden, beziehungsweise kann unter wirtschaftlich sinnvollen Bedingungen Anwendung von pulverized coal injection PCI bei solchen Aggregaten ausgebaut oder überhaupt erst möglich gemacht werden.

Ein weiterer Gegenstand der vorliegenden Erfindung ist ein Pressling enthaltend Feinkohle und PVA, dadurch gekennzeichnet, dass er PVA in einer Mindestmenge von 0,2 Massen%, bevorzugt 0,3 Massen%, besonders bevorzugt 0,4 Massen%, und einer Maximalmenge von 2,6 Massen%, bevorzugt 1,6 Massen%, besonders bevorzugt 1,0 Massen% umfasst. Diese Prozentangaben beziehen sich auf die Substanz des Presslings ausgenommen Wasser.

Die Feuchte der Presslinge beträgt im Grünzustand - also beispielsweise als Grünbrikett - maximal 15%, bevorzugt maximal 13%, besonders bevorzugt maximal 11%; ein bevorzugter Bereich beträgt 5-15%, besonders bevorzugt 6-13%, ganz besonders bevorzugt 7-11%.
Die Feuchte eines getrockneten Presslings ist vorzugsweise kleiner gleich 5%, bevorzugt kleiner gleich 3%, besonders bevorzugt kleiner gleich 1%.
Feuchte ist hier Massen% Gehalt an Wasser.

Ein weiterer Gegenstand der vorliegenden Erfindung ist die Verwendung eines mittels erfindungsgemäßem Verfahren hergestellten Presslings beziehungsweise eines erfindungsgemäßen Presslings zur Produktion von flüssigem Roheisen. Die Produktion des Roheisens kann beispielsweise in einem Einschmelzvergaser erfolgen, oder sie kann - nach Herstellung von Koks aus den Presslingen, und Einsatz dieses Koks in einem Hochofen - in einem Hochofen erfolgen. Diese Verwendung kann beispielsweise erfolgen, indem die Presslinge entgast beziehungsweise verkokt werden und der entstehende Char beziehungsweise Koks zur Herstellung von Roheisen genutzt wird..
Oder sie kann nach einer Aushärtung der erfindungsgemäß hergestellten Presslinge erfolgen, die beispielsweise durch Ablagerung oder durch Wärmebehandlung - thermische Trocknung - erfolgen kann.
Bei Feuchten unter 3 Massen% Wassergehalt ergibt sich erfindungsgemäß ein akuter Anstieg der Stabilität (. Bevorzugt sind Behandlungstemperaturen bei der thermischen Trocknung von 70-180°C, besonders bevorzugt 100-150°C. Bei diesen Behandlungstemperaturen ist einerseits die Verweilzeit in einem Trocknungsaggregat beziehungsweise die benötigte Größe des Trocknungsaggregats begrenzt, und andererseits die Gefahr einer Schwächung der bindenden Eigenschaften von PVA durch thermische Zersetzung sowie die Gefahr einer Selbstentzündung der Briketts begrenzt.
Um den Trocknungsaufwand für Feuchten unter 3% zu minimieren, ist es vorteilhaft, Wassereintrag im erfindungsgemäßen Verfahren gering zu halten.

Gegebenenfalls kann es auch vorteilhaft sein, zur Herstellung der erfindungsgemäßen Briketts nicht das erfindungsgemäße Verfahren anzuwenden. Beispielsweise kann Feinkohle infolge Starkregen oder Ausfall einer Vortrocknung übermäßig feucht sein - dann empfiehlt es sich, auf eine Zugabe mit Flüssigkeit zu verzichten, und nur pulverförmiges PVA als Feststoff zuzugeben.
Im umgekehrten Fall hinreichend trockener Feinkohle kann erfindungsgemäß das gesamte benötigte PVA mit Flüssigkeit zugesetzt werden und dann unter Zugabe von Dampf gemischt werden.
Grundsätzlich kann zwischen diesen beiden Extremsituationen die Feuchte der ersten Masse erfindungsgemäß auch durch Änderung der Anteile von als Feststoff zugegebenem PVA und von mit Flüssigkeit zugegebenem PVA geregelt werden - und damit Änderung der mit PVA eingebrachten Flüssigkeitsmenge.

Ein weiterer Gegenstand der vorliegenden Anmeldung ist eine Vorrichtung geeignet zur Durchführung eines erfindungsgemäßen Verfahrens,
mit einer Vermischungseinrichtung
zur Durchführung der ersten Mischung von Feinkohle mit
PVA zugeführt mit Flüssigkeit in wässriger Lösung und/oder wässriger Dispersion und/oder
PVA zugeführt als Feststoff pulverförmig,
wobei die Vermischungseinrichtung zumindest eine Feinkohlezugabeleitung umfasst,
und mit einer Presseinrichtung zur Weiterverarbeitung der aus der Vermischungseinrichtung erhaltenen ersten Masse zu Presslingen, in die eine von der Vermischungseinrichtung ausgehende Massenzugabeleitung mündet,
dadurch gekennzeichnet, dass
die Vermischungseinrichtung eine Dampfzugabeleitung zur Zugabe von Dampf umfasst,
und dass die Vermischungseinrichtung zumindest eine Flüssigbinderzugabeleitung zur Zugabe von PVA mit Flüssigkeit in wässriger Lösung und/oder wässriger Dispersion aufweist.

Die Vermischungseinrichtung kann eine oder mehrere Mischkammern aufweisen, beispielsweise eine Vormischkammer und eine Endmischkammer.

Nach einer bevorzugten Ausführungsform weist die Vermischungseinrichtung auch zumindest eine Festbinderzugabeleitung zur Zugabe von PVA als pulverförmigen Feststoff auf.

Nach einer bevorzugten Ausführungsform umfasst die Vermischungseinrichtung zumindest eine Vorrichtung zur Zugabe von Zusatzwasser.

Nach einer bevorzugten Ausführungsform umfasst die erfindungsgemäße Vorrichtung auch eine Entwrasungsvorrichtung.

Nach einer bevorzugten Ausführungsform umfasst die erfindungsgemäße Vorrichtung auch eine Feinkohlezufuhrleitung zur Zugabe einer zweiten Menge Feinkohle zu der ersten Masse, sowie eine Mischeinrichtung zur Vermischung der ersten Masse mit der zweiten Menge Feinkohle. Die Feinkohlezufuhrleitung zur Zugabe einer zweiten Menge Feinkohle kann beispielsweise in die Entwrasungsvorrichtung münden oder, in Richtung von der Vermischungseinrichtung zur Presseinrichtung gesehen vor oder hinter der Entwrasungsvorrichtung, in die Massenzugabeleitung; die Mischeinrichtung ist dann beispielsweise in der Entwrasungseinrichtung integriert, oder in der Massenzugabeleitung angeordnet.
In die Feinkohlezufuhrleitung und/oder die Mischeinrichtung kann auch eine Flüssigbinderzusatzleitung münden, über die PVA in Flüssigkeit der zweiten Menge Feinkohle oder der Mischeinrichtung zugegeben werden kann bei Bedarf.

Nach einer Variante umfasst die erfindungsgemäße Vorrichtung eine Mischvorrichtung zur Herstellung einer zweiten Masse aus der zweiten Menge Feinkohle mit PVA in wässriger Lösung und/oder in wässriger Dispersion, von der eine Massenzusatzleitung ausgeht, welche geeignet ist zur Zugabe der zweiten Masse zu der ersten Masse. Die Massenzusatzleitung mündet entsprechend an einer Stelle der Vorrichtung in ein Vorrichtungsteil, das erste Masse oder entwraste erste Masse führt.

Nach einer bevorzugten Ausführungsform umfasst die erfindungsgemäße Vorrichtung zumindest eine Feuchtemessungsvorrichtung zur, bevorzugt kontinuierlichen, Messung der Feuchte der ersten Masse und/oder der entwrasten ersten Masse und/oder der zweiten Masse und/oder der Produktmasse, sowie zumindest eine Feuchteregelungseinrichtung, die geeignet ist zur direkten oder indirekten Regelung der Feuchte zumindest einer dieser Feuchten und/oder der Feuchte der Presslinge auf einen Zielbereich hin mittels Durchführung zumindest einer Maßnahme aus der Gruppe bestehend aus den Mitgliedern:
- Einstellung der durch wässrige Lösung oder wässrige Emulsion von PVA zugeführten spezifischen Wassermenge pro Mengeneinheit Feinkohle;
- Einstellung der durch Zusatzwasser zugeführten spezifischen Wassermenge pro Mengeneinheit Feinkohle;
- Einstellung der durch Zugabe von Dampf bei der ersten Mischung zugeführten spezifischen Wassermenge pro Mengeneinheit Feinkohle;
- Einstellung Feuchte der Feinkohle;
- Einstellung des Mengenverhältnisses erste Masse zu zweiter Masse bei Herstellung einer Produktmasse;
- Einstellung der zugegebenen Menge Zusatzwasser..

Die Einstellung der Feuchte der Feinkohle kann beispielsweise durch Regelung einer Trocknungsvorrichtung für Feinkohle erfolgen.
Die Feuchte der Presslinge kann beispielsweise die Feuchte von Grünpresslingen sein, also des direkten Produktes der Pressung.

Nach einer bevorzugten Ausführungsform umfasst die erfindungsgemäße Vorrichtung zumindest eine Temperaturmessvorrichtung zur, bevorzugt kontinuierlichen, Messung der Temperatur der ersten Masse und/oder der entwrasten ersten Masse und/oder der zweiten Masse und/oder der Produktmasse, sowie zumindest eine Temperaturregelungseinrichtung, die geeignet ist zur direkten oder indirekten Regelung zumindest einer dieser Temperaturen und/oder der Temperatur der Presslinge auf einen Zielbereich hin mittels Durchführung zumindest einer Maßnahme aus der Gruppe bestehend aus den Mitgliedern:
- Einstellung der durch Zugabe von Dampf bei der ersten Mischung zugeführten spezifischen Wärmemenge pro Mengeneinheit Feinkohle;
- Einstellung der Temperatur der ersten Menge Feinkohle,
- Einstellung der Temperatur der zweiten Menge Feinkohle,
- Einstellung der durch wässrige Lösung oder wässrige Emulsion von PVA zugeführten spezifischen Wärmemenge pro Mengeneinheit Feinkohle;
- Einstellung der von
   als Feststoff pulverförmig zugeführtem PVA
   zugeführten spezifischen Wärmemenge pro Mengeneinheit Feinkohle;
- Einstellung der durch Zusatzwasser zugeführten spezifischen Wärmemenge pro Mengeneinheit Feinkohle;.
- Einstellung des Mengenverhältnisses erste Masse zu zweiter Masse bei Herstellung einer Produktmasse.

Die Temperatur der Presslinge kann beispielsweise die Feuchte von Grünpresslingen sein, also des direkten Produktes der Pressung.

Bei Regelung von Temperatur oder Feuchte über Massenströme sind selbstverständlich auch dazu fähige Dosiervorrichtungen vorhanden.

Nach einer bevorzugten Ausführungsform umfasst die erfindungsgemäße Vorrichtung auch zumindest eine Zusatzbinderzugabeleitung zur Zugabe von anderen Bindern als PVA zur Feinkohle und/oder zur ersten Masse und/oder zur entwrasten ersten Masse und/oder zur zweiten Masse und/oder zur Produktmasse; bevorzugt sind diese anderen Binder Teer und/oder Bitumen.
Die Zusatzbinderzugabeleitung mündet entsprechend an einer Stelle der Vorrichtung in ein Vorrichtungsteil, das erste Masse oder entwraste erste Masse oder zweite Masse oder Produktmasse führt.

### Kurze Beschreibung der Zeichnungen

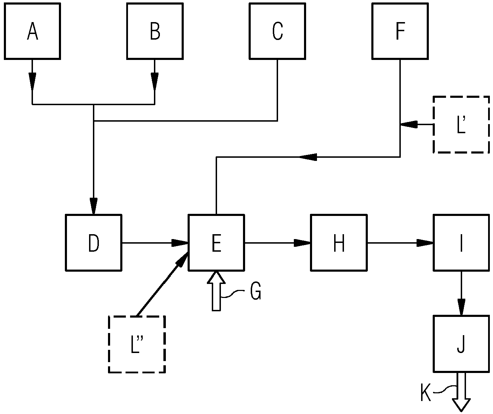

Anhand Figur 1 wird beispielhaft eine Ausführungsform eines erfindungsgemäßen Verfahrens erläutert.

### Beschreibung der Ausführungsformen

Die Darstellung in Figur 1 gilt im Prinzip sowohl für einen kontinuierlich als auch für einen batch-weise durchgeführten Prozess.
Zu brikettierende Kohle, die wie in Figur 1 dargestellt eine durch Dosierung erhaltende Mischung aus mehreren Kohlesorten A und B sein kann, wird nach Vortrocknung zu Feinkohle im erfindungsgemäßen Sinn gemahlen. Vortrocknung ist im erfindungsgemäßen Verfahren nicht zwingend vorhanden, sondern optional.
Die verschieden harte Kohlesorten A und B werden zur Optimierung des Mahlaufwandes getrennt gemahlen. Eine Mahlung bereits gemischter Kohlesorten würde den Verfahrensablauf vereinfachen.
In Figur 1 ist gezeigt, wie der aus den Kohlesorten A und B hergestellten Feinkohle PVA als Feststoff pulverförmig zudosiert wird. Dieses mit Bezugszeichen C versehene PVA wurde auf vorher auf gewünschte Korngröße gemahlen.
Die erste Mischung erfolgt in mehreren Stufen; wobei zunächst in einer ersten Stufe D die festen Komponenten Kohlesorte A, Kohlesorte B, PVA C trocken vorgemischt werden, und in einer darauffolgenden zweiten Stufe E einerseits PVA mit Flüssigkeit, Bezugszeichen F, und andererseits Dampf G dosiert hinzugemischt werden.
Nach der zweiten Stufe E findet Entwrasung H der ersten Masse statt. Die beispielsweise mittels eines Trägergases, wie etwa Luft, entwraste erste Masse wird direkt einer Pressung I unterworfen. Dargestellt ist, dass die bei der Pressung I erhaltenen Grünbriketts noch einer Härtung J unterworfen werden, aus der dann Briketts K gewonnen werden. Die Härtung J kann durch Auslagern der Grünbriketts an der Umgebungsluft beziehungsweise in belüfteten Behältnissen erfolgen, und/oder durch eine Wärmebehandlung.

Die erste Stufe D und die zweite Stufe E erfolgen in der Vermischungseinrichtung
zur Durchführung der ersten Mischung von Feinkohle mit PVA zugeführt mit Flüssigkeit in wässriger Lösung und/oder wässriger Dispersion sowie PVA zugeführt als Feststoff pulverförmig. Die erste Stufe D in einer Vormischkammer, die zweite Stufe in einer Endmischkammer.
Von der Vermischungseinrichtung, konkret von der Endmischkammer, geht eine Massenzugabeleitung aus, die in eine Presseinrichtung zur Weiterverarbeitung der aus der Vermischungseinrichtung erhaltenen ersten Masse zu Presslingen durch Pressung I mündet. In dieser Massenzugabeleitung ist eine Entwrasungsvorrichtung angeordnet zur Entwrasung H der ersten Masse. Die Pressung I wird an der entwrasten ersten Masse ausgeführt, die durch die Massenzugabeleitung von der Entwrasungsvorrichtung in die Presseinrichtung geleitet wird.
Dampf G wird durch die von der Vermischungseinrichtung umfasste Dampfzugabeleitung in die Vermischungseinrichtung zugegeben.
Die Vermischungseinrichtung weist eine Flüssigbinderzugabeleitung zur Zugabe von PVA mit Flüssigkeit in wässriger Lösung und/oder wässriger Dispersion auf; durch diese wird F in die Endmischkammer, in der die zweite Stufe E durchgeführt wird, zugegeben.

Die Vermischungseinrichtung weist auch eine Festbinderzugabeleitung zur Zugabe von PVA als pulverförmigen Feststoff auf. Dargestellt ist das in Figur 1 durch die C mit D verbindende Linie. Die Festbinderzugabeleitung kann auch Teil einer Feinkohlezugabeleitung sein, wie in Figur 1 schematisch dargestellt. Die Feinkohlezugabeleitung ist schematisch dargestellt durch die A und B mit D verbindende Linie.

Die Vermischungseinrichtung umfasst zwei Vorrichtungen zur Zugabe von Zusatzwasser, dargestellt schematisch durch die Blöcke mit den Bezugszeichen L' und L". Die eine Vorrichtung mündet in die Flüssigbinderzugabeleitung, die andere mündet in die Endmischkammer.

Auf die Zugabe von PVA mit Flüssigkeit beziehungsweise die Entwrasung H könnte gegebenenfalls auch verzichtet werden. Ebenso könnte die erste Mischung auch einstufig erfolgen.

Zusatzwasser L könnte gemeinsam mit PVA mit Flüssigkeit F zugegeben werden-dargestellt mit dem strichlierten Block L' -, und/oder separat - dargestellt mit dem strichlierten Block L".

Zugabe von Dampf G oder Zusatzwasser L erfolgt geregelt auf Basis definierter Sollwertes. Diese werden beispielsweise auf Basis von Temperaturmessung in oder nach der ersten Stufe, und/oder in oder nach der zweiten Stufe, beziehungsweise nach dem Entwrasen definiert. Weitere Faktoren zu ihrer Definition können sein Feuchte nach der zweiten Stufe beziehungsweise nach der ersten Mischung, und/oder Feuchte nach dem Entwrasen beziehungsweise vor dem Pressen.

Für eine möglichst vollständige Aktivierung und homogene Verteilung des trockenen PVA Pulvers C ist es vorteilhaft, Feuchte und Temperatur bei der ersten Mischung einzustellen und diese bei kontinuierlichem Verfahrensablauf weitgehend konstant zu halten. Das erfolgt in Figur 1 dadurch, dass die Temperatur in der ersten Stufe beziehungsweise zwischen erster und zweiter Stufe gemessen wird. Es kann auch die Temperatur der in der zweiten Stufe zugegebenen Komponenten gemessen werden. Zusammen mit den aus den Dosierungen der Komponenten bekannten Massenströmen lässt sich bei bekannter Dampfenthalpie die Menge an Dampf berechnen, die zur Einstellung der gewünschten Temperatur während der ersten Mischung beziehungsweise vor der Pressung zuzugeben ist.
Eine weitere Regelung gleicht den Unterschied der sich aus der Zugabe von Dampf ergebenden Feuchte und der gewünschten Feuchte der ersten Masse beziehungsweise der entwrasten ersten Masse aus. Dies kann beispielsweise auf einer Messung der Feuchte der ersten Masse nach der zweiten Stufe basieren, oder bei Durchführung einer Entwrasung auf einer Messung der Feuchte nach der Entwrasung. Der Umfang der Entwrasung kann auf Basis der hervorgerufenen Änderung von Feuchte und Temperatur geregelt werden. Bevorzugt ist es, über die zugegebene Menge Zusatzwasser die Feuchte zu regeln, statt über die mit C eingebrachte Flüssigkeitsmenge.

Zur besseren Übersichtlichkeit sind entsprechende Feuchtemessungsvorrichtungen, Feuchteregelungseinrichtungen, Temperaturmessvorrichtungen, Temperaturregelungseinrichtungen in Figur 1 nicht extra eingezeichnet.

Die Offenbarung der vorliegenden Anmeldung umfasst auch die gesamte Offenbarung der WO2013152959, speziell bezüglich der dortigen Ausführungen zum Stand der Technik.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- A: Kohlesorte
- B: Kohlesorte
- C: PVA pulverförmig
- D: Erste Stufe erste Mischung
- E: Zweite Stufe erste Mischung
- F: PVA mit Flüssigkeit
- G: Dampf
- H: Entwrasung
- I: Pressung
- J: Härtung
- K: Briketts
- L', L": Zusatzwasser

## Patentansprüche

1. Verfahren zur Herstellung von Feinkohle enthaltenden Presslingen, wobei PVA als ein Binder verwendet wird,
**dadurch gekennzeichnet, dass**
einer ersten Menge Feinkohle PVA zugeführt wird
mit Flüssigkeit in wässriger Lösung und/oder wässriger Dispersion
und dann erste Mischung unter Zugabe von Dampf erfolgt,
bevor die bei dieser ersten Mischung erhaltene erste Masse zu Presslingen weiterverarbeitet wird.

2. Verfahren nach Anspruch 1, **dadurch gekennzeichnet, dass**
der ersten Menge Feinkohle PVA zugeführt
sowohl
mit Flüssigkeit in wässriger Lösung und/oder wässriger Dispersion
als auch
als Feststoff pulverförmig,
und dann erste Mischung unter Zugabe von Dampf erfolgt,
bevor die bei dieser ersten Mischung erhaltene erste Masse zu Presslingen weiterverarbeitet wird.

3. Verfahren nach Anspruch 1 oder 2, **dadurch gekennzeichnet, dass** die Weiterverarbeitung der ersten Masse zu Presslingen auch Zugabe einer zweiten Menge Feinkohle zu der ersten Masse umfasst,
und eine zweite Mischung dieser beiden Komponenten erfolgt,
bevor die dabei erhaltene Produktmasse zu Presslingen weiterverarbeitet wird.

4. Verfahren nach Anspruch 3, **dadurch gekennzeichnet, dass**
die zweite Menge Feinkohle vor ihrer Zugabe zur ersten Masse
mit PVA in wässriger Lösung und/oder in wässriger Dispersion
zu einer zweiten Masse gemischt wird,
und Zugabe der zweiten Menge Feinkohle zu der ersten Masse durch Zugabe der zweiten Masse erfolgt.

5. Verfahren nach einem der Ansprüche 1 bis 4, **dadurch gekennzeichnet, dass** eine Formung zu Presslingen direkt ausgeführt wird an einem Mitglied der Gruppe bestehend aus:
- erste Masse,
- entwraste erste Masse,
- Produktmasse.

6. Verfahren nach einem der Ansprüche 1 bis 5, **dadurch gekennzeichnet, dass** verschiedene Sorten PVA zugeführt werden.

7. Verfahren nach Anspruch 6, **dadurch gekennzeichnet, dass** das mit Flüssigkeit in wässriger Lösung oder wässriger Dispersion zugeführte PVA vollverseift ist, und das als Feststoff pulverförmig ist.

8. Verfahren nach Anspruch 6 oder 7, **dadurch gekennzeichnet, dass** das mit Flüssigkeit in wässriger Lösung oder wässriger Dispersion
zugeführte PVA vollverseift und mittel- oder kurzkettig ist,
und
das als Feststoff pulverförmig zugeführte PVA teilverseift und langkettig ist.

9. Verfahren nach einem der Ansprüche 1 bis 9, **dadurch gekennzeichnet, dass** neben PVA auch zumindest ein weiterer Binder vorhanden ist, bevorzugt Teer und/oder Bitumen.

10. Pressling enthaltend Feinkohle und PVA, **dadurch gekennzeichnet, dass** er PVA in einer Mindestmenge von 0,2 Massen%, bevorzugt 0,3 Massen%, besonders bevorzugt 0,4 Massen%, und einer Maximalmenge von 2,6 Massen%, bevorzugt 1,6 Massen%, besonders bevorzugt 1,0 Massen% umfasst.

11. Vorrichtung geeignet zur Durchführung eines erfindungsgemäßen Verfahrens,
mit einer Vermischungseinrichtung
zur Durchführung der ersten Mischung von Feinkohle mit
PVA zugeführt mit Flüssigkeit in wässriger Lösung und/oder wässriger Dispersion und/oder
PVA zugeführt als Feststoff pulverförmig,
wobei die Vermischungseinrichtung zumindest eine Feinkohlezugabeleitung umfasst,
und mit einer Presseinrichtung zur Weiterverarbeitung der aus der Vermischungseinrichtung erhaltenen ersten Masse zu Presslingen, in die eine von der Vermischungseinrichtung ausgehende Massenzugabeleitung mündet,
**dadurch gekennzeichnet, dass**
die Vermischungseinrichtung eine Dampfzugabeleitung zur Zugabe von Dampf umfasst,
und dass die Vermischungseinrichtung zumindest eine Flüssigbinderzugabeleitung zur Zugabe von PVA mit Flüssigkeit in wässriger Lösung und/oder wässriger Dispersion aufweist.

12. Vorrichtung nach Anspruch 11, **dadurch gekennzeichnet, dass** die Vermischungseinrichtung auch zumindest eine Festbinderzugabeleitung zur Zugabe von PVA als pulverförmigen Feststoff aufweist.

13. Vorrichtung nach Anspruch 11 oder 12, **dadurch gekennzeichnet, dass** die erfindungsgemäße Vorrichtung auch eine Feinkohlezufuhrleitung zur Zugabe einer zweiten Menge Feinkohle zu der ersten Masse umfasst, sowie eine Mischeinrichtung zur Vermischung der ersten Masse mit der zweiten Menge Feinkohle.

14. Vorrichtung nach einem der Ansprüche 11 bis 13, **dadurch gekennzeichnet, dass** sie eine Mischvorrichtung zur Herstellung einer zweiten Masse aus der zweiten Menge Feinkohle mit PVA in wässriger Lösung und/oder in wässriger Dispersion umfasst, von der eine Massenzusatzleitung ausgeht, welche geeignet ist zur Zugabe der zweiten Masse zu der ersten Masse.

15. Vorrichtung nach einem der Ansprüche 11 bis 14, **dadurch gekennzeichnet, dass** sie auch zumindest eine Zusatzbinderzugabeleitung zur Zugabe von anderen Bindern als PVA zur Feinkohle und/oder zur ersten Masse und/oder zur entwrasten ersten Masse und/oder zur zweiten Masse und/oder zur Produktmasse umfasst.
